# EUROPÄISCHE PATENTSCHRIFT

(11) **EP 1 431 009 B1**
(45) Veröffentlichungstag und Bekanntmachung des Hinweises auf die Patenterteilung: **11.05.2005**
(21) Anmeldenummer: 03029127.2
(22) Anmeldetag: 18.12.2003
(51) Int. Cl.: B25J 15/02

(54) **Greifer mit verschiebbarem Zahnrad**
Gripper with sliding gearwheel
Dispositif de préhension avec roue dentée coulissante

(30) Priorität: 18.12.2002 DE 20219598 U
(43) Veröffentlichungstag der Anmeldung: 23.06.2004
(73) Patentinhaber: Emil Jäger GmbH & Co. KG, D-48153 Münster (DE)
(72) Erfinder: Stockmann, Albert, 48727 Billerbeck (DE)
(74) Vertreter: Habbel, Ludwig (Lutz), Dipl.-Ing.

(56) Entgegenhaltungen:
- DE-A- 19 518 062
- DE-U- 9 214 806
- FR-A- 2 265 495
- SU-A- 1 306 710
- US-A- 6 092 848

## Beschreibung

Die Erfindung betrifft einen Greifer nach dem Oberbegriff des Anspruchs 1.

Im Bereich von Gitterschweißmaschinen sind gattungsgemäße Greifer bekannt, als Komponente einer Wendeanlage, welche die Drahtgittermatten erfasst und zum Abstapeln ablegt.

Aufgrund der Hakenbewegung ist innerhalb der Mattenebene ein gewisser Freiraum erforderlich, in welchem sich der Haken bewegt, wenn er von außerhalb der Mattenebene durch die Mattenebene hindurchfährt, um in seine Haltestellung zu gelangen. Dieser erforderliche Freiraum bestimmt den Mindestabstand der Drähte zueinander.

Wird eine Drahtgittermatte mit einer kleineren Teilung gewünscht, sodass also die entsprechenden Drähte innerhalb des vorzusehenden Freiraumes liegen, so muss eine andere Greiferkonstruktion zum Handhaben derartiger Matten geringer Teilung verwendet werden, beispielsweise ein etwa zangenartiger Greifer, der mit zwei Greifbacken einen Draht der Gittermatte umfasst. Derartige Greifer sind im Vergleich zu gattungsbildenden Greifern jedoch konstruktiv und handhabungsmäßig aufwendiger.

Der Erfindung liegt die Aufgabe zugrunde, einen gattungsgemäßen Greifer dahingehend zu verbessern, dass dieser auch bei Drahtgittermatten mit kleiner Teilung einsetzbar ist.

Diese Aufgabe wird durch einen Greifer mit den Merkmalen des Anspruchs 1 gelöst.

Die Erfindung schlägt mit anderen Worten vor, das Zahnrad nach wie vor mitsamt dem Haken zu verschwenken. Dabei soll das Zahnrad allerdings nichts ortsfest gelagert sein, sondern während seiner Schwenkbewegung entlang einer Zahnstange abrollen. Durch diese überlagerte Schwenk- und Schiebebewegung bewegt sich der Haken in einem sehr geringen Freiraum durch die Gittermattenebene, sodass auch Drahtgittermatten mit vergleichsweise kleiner Teilung von dem vorschlagsgemäßen Greifer erfassbar sind.

Der Antrieb des Zahnrades kann dabei auf beliebige Weise erfolgen. In besonders einfacher konstruktiver Ausführung und besonders betriebssicher kann vorgesehen sein, das Zahnrad zwischen zwei Zahnstangen zu lagern, die unterschiedlich beweglich sind bzw. von denen lediglich eine Zahnstange beweglich ist. Durch den Bewegungsunterschied zwischen den beiden Zahnstangen kommt es zur gleichzeitigen Schwenk- und Abrollbewegung des Zahnrades, sodass die vorschlagsgemäßen Vorteile mit einer vergleichsweise einfachen Konstruktion und einfachen Steuerung erzielbar sind.

Vorteilhaft kann der Greifer als Doppelgreifer ausgestaltet werden, wenn die Zahnstange auf beiden Seiten gezahnt ist, sodass in symmetrischer Ausgestaltung ein rechter und ein linker bzw. ein oberer und ein unterer Haken vorgesehen sein können.

Ein Ausführungsbeispiel der Erfindung wird anhand der Zeichnungen nachfolgend näher erläutert. Dabei zeigt
- Fig. 1: eine Ansicht auf einen Doppelgreifer mit den Haken in ihren beiden Endstellungen, und
- Fig. 2: eine Ansicht ähnlich Fig. 1, wobei einer der beiden Haken in mehreren Zwischenschritten der Bewegung dargestellt ist.

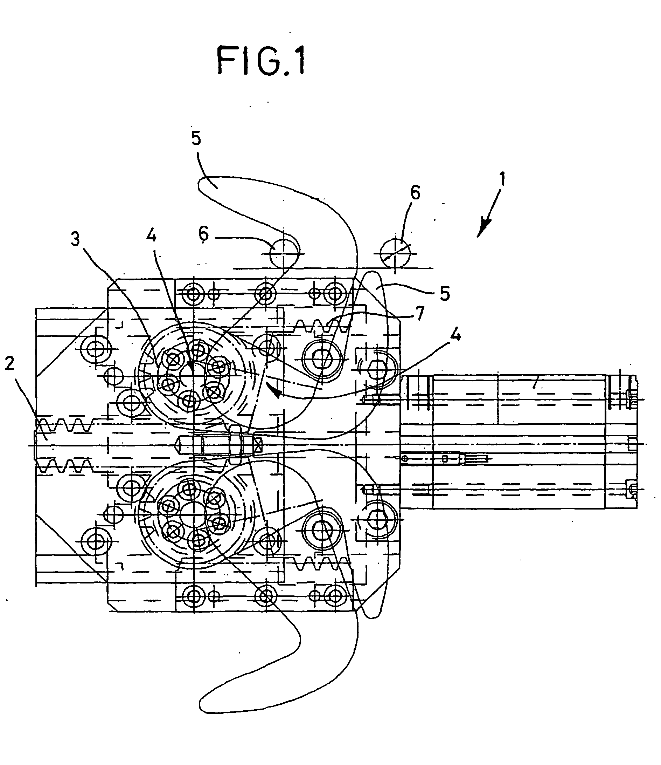

In Fig. 1 ist mit 1 insgesamt ein Greifer bezeichnet, der als Doppelgreifer ausgestaltet ist. Der Greifer 1 weist eine Antriebsstange 2 auf, die als Zahnstange auf ein oberes Zahnrad 3 wirkt und dieses in Drehung versetzt. In der in Fig. 1 dargestellten Ausgangsposition weist das Zahnrad 3 einen Drehpunkt 4 auf, der vergleichsweise weit links angeordnet ist.

Mit dem Zahnrad 3 verbunden ist ein Haken 5, der in dieser Ausgangsstellung seine liegende Freigabestellung einnimmt. Diese Freigabestellung bewirkt, dass der Haken 5 außerhalb der Ebene einer Drahtgittermatte befindlich ist, wobei zwei Querdrähte 6 dieser Drahtgittermatte dargestellt sind, um den angesichts dieser vergleichsweise geringen Teilung der Matte geringen Freiraum zwischen zwei benachbarten Querdrähten 6 zu veranschaulichen, in welchen der Haken 5 eintauchen muss.

Während einer Zugbewegung der Antriebsstange 2 aus ihrer in Fig. 1 dargestellten Ausgangsstellung nach rechts dreht sich das Zahnrad 3 entgegen dem Uhrzeigersinn und rollt dabei an einer oberen Zahnstange 7 ab. Dabei bewegt sich das Zahnrad 3 mitsamt dem Haken 5 von rechts nach links in eine zweite Endstellung, die als Haltestellung bezeichnet ist. In dieser Haltestellung befindet sich der Drehpunkt 4 weiter rechts und der Haken 5 befindet sich in seiner angehobenen Haltestellung, in welcher er dem linken der beiden dargestellten Querdrähte 6 anliegt.

Aus den in Fig. 1 dargestellten beiden Endstellungen des Hakens 5 und aus dem Vergleich der beiden Stellen, an denen sich jeweils der Drehpunkt 4 befindet, ist ersichtlich, dass der Haken 5 erheblich weiter links angeordnet wäre, wenn sich das Zahnrad 3 ausschließlich ortsfest um seinen links dargestellten Drehpunkt 4 drehen würde, sodass in einem derartigen Fall die Teilung der Drahtgittermatte, also der Abstand der beiden benachbarten Querdrähte 6, erheblich größer sein müsste.

Aus Fig. 1 ist weiterhin ersichtlich dass symmetrisch zu der vorbeschriebenen oberen Anordnung eines Greifers auf der unteren Seite der Antriebsstange 2 ebenfalls eine Verzahnung vorgesehen ist und dort spiegelbildlich zur erläuterten oberen Greiferanordnung auch eine untere Greiferanordnung mit einem unteren Zahnrad und einem unteren Haken verwirklich ist, sodass der Greifer 1 insgesamt als Doppelgreifer ausgestaltet ist.

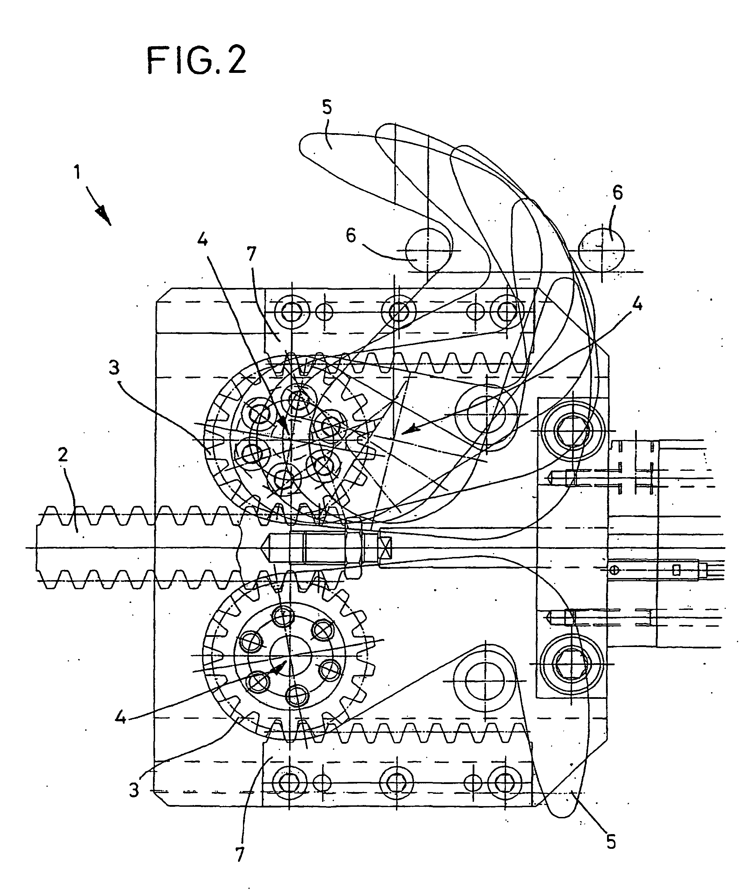

Fig. 2 zeigt anhand des oberen der beiden Haken dessen Bewegung in mehreren Phasen in einem im Vergleich zu Fig. 1 größeren Maßstab. Auch die untere Hälfte des Doppelgreifers 1 ist hier in größerem Maßstab ersichtlich, wobei für grundsätzlich gleiche Bauteile die gleichen Bezugszeichen verwendet werden wie für die obere Hälfte des Doppelgreifers.

## Patentansprüche

1. Greifer für Drahtgittermatten,
mit einem drehbar gelagerten Zahnrad,
und mit einem gemeinsam mit dem Zahnrad schwenkbeweglichen Haken, welcher durch die Schwenkbewegung des Zahnrades zwischen einer außerhalb der Mattenebene befindlichen Freigabestellung und einer sich durch die Mattenebene erstreckende Haltestellung beweglich ist,
und wobei das Zahnrad mit einer Zahnstange kämmt,
**dadurch gekennzeichnet,**
**dass** das Zahnrad (3) auf der Zahnstange (2) abrollend gelagert ist, derart, dass der Drehpunkt (4) des Zahnrades (3) ortsveränderlich ist.

2. Greifer nach Anspruch 1,
**dadurch gekennzeichnet,**
**dass** das Zahnrad (3) zwischen zwei Zahnstangen (2,7) gelagert ist, wobei es mit beiden Zahnstangen (2,7) kämmt, und wobei wenigstens eine der beiden Zahnstangen (2,7) oszillierend angetrieben ist.

3. Greifer nach Anspruch 1 oder 2,
**dadurch gekennzeichnet,**
**dass** der Greifer (1) als Doppelgreifer mit zwei Haken (5) ausgestaltet ist,
wobei die Zahnstange (2) beidseitig gezahnt ist und die beiden Haken (5) sich zu beiden Seiten der Zahnstange (2) erstrecken.

## Revendications

1. Dispositif de préhension pour tapis en grilles de fil, avec roue dentée coulissante, et présentant un crochet pivotant conjointement à la roue dentée, lequel crochet, vu le mouvement pivotant de la roue dentée, se déplace entre une position de libération située en dehors du plan du tapis, et une position de retenue s'étendant à travers le plan du tapis, et la roue dentée engrenant dans une crémaillère,
**caractérisé en ce que**
la roue dentée (3) se trouve en appui roulant sur la crémaillère (2), de telle sorte que le point de rotation (4) de la roue dentée (3) est nomade.

2. Dispositif de préhension selon la revendication 1,
**caractérisé en ce que**
la roue dentée (3) se trouve en appui entre deux crémaillères (2, 7), la roue dentée engrenant de la sorte avec les deux crémaillères (2, 7), et au moins l'une des deux crémaillères (2, 7) étant entraînée de façon oscillante.

3. Dispositif de préhension selon la revendication 1 ou 2,**caractérisé en ce que** le dispositif de préhension (1) est configuré en dispositif double doté de deux crochets (5), la crémaillère (2) présentant des dentures des deux côtés et les deux crochets (5) s'étendant des deux côtés de la crémaillère (2).

## Claims

1. Gripper for wire-mesh mats with a sliding gearwheel and with a hook which turns jointly with the gearwheel and which, through the turning movement of the gearwheel, can move between a release position outside the mat level and a holding position extending through the mat level, and where the gearwheel engages in a toothed rack,
**characterised in**
**that** the gearwheel (3) is mounted on bearings to roll along the toothed rack (2) in such a way that the centre of rotation (4) of the gearwheel (3) changes its location.

2. Gripper according to claim 1,
**characterised in**
**that** the gearwheel (3) is mounted on bearings between two toothed racks (2,7) where it engages both toothed racks (2,7) and where at least one of the toothed racks (2,7) is driven in an oscillating manner.

3. Gripper according to claim 1 or 2,
**characterised in**
**that** the gripper (1) is formed as a double gripper with two hooks (5), where the toothed rack (2) has teeth on both sides and the two hooks (5) extend to both sides of the toothed rack (2).
